# EUROPÄISCHE PATENTSCHRIFT

(11) **EP 2 227 842 B1**
(45) Veröffentlichungstag und Bekanntmachung des Hinweises auf die Patenterteilung: **22.06.2011**
(21) Anmeldenummer: 08845391.5
(22) Anmeldetag: 30.10.2008
(51) Int. Cl.: G06K 19/04

(54) **SCHUTZEINRICHTUNG FÜR PORTABLEN DATENTRÄGER**
PROTECTIVE DEVICE FOR A PORTABLE DATA CARRIER
DISPOSITIF DE PROTECTION POUR DES SUPPORTS DE DONNÉES PORTABLES

(30) Priorität: 02.11.2007 DE 102007052350
(43) Veröffentlichungstag der Anmeldung: 15.09.2010
(73) Patentinhaber: Giesecke & Devrient GmbH, 81677 München (DE)
(72) Erfinder: SCHEIBENZUBER, Robert, 81373 München (DE); SCHENK, Stefan, 90419 Nürnberg (DE)
(86) Internationale Anmeldenummer: PCT/EP2008/009173
(87) Internationale Veröffentlichungsnummer: WO 2009/056318

(56) Entgegenhaltungen:
- EP-A- 1 367 497
- US-A1- 2005 009 388
- US-A1- 2005 079 738
- US-A1- 2005 130 469
- US-A1- 2007 049 217

## Beschreibung

Die vorliegende Erfindung betrifft einen portablen Datenträger mit einem Datenträgerkörper und einem Verschlusselement.

Portable Datenträger sind in der Regel relativ klein und umfassen eine gegenüber dem Datenträgerkörper prägnante Schnittstelleneinrichtung, mit der der Datenträger mit einem elektronischen Schreib-/Lesegerät zum Datenaustausch verbunden wird, zum Beispiel mit einem Computer, Laptop, PDA, Mobiltelefon oder dergleichen. Hierbei ist die Schnittstelleneinrichtung, die meist einen Stecker bildet, zumindest bei häufiger Verwendung des Datenträgers vielfältigen schädigenden Umwelteinflüssen ausgesetzt, wie zum Beispiel Schmutz, Staub, Fettablagerungen, antistatischen Entladungen oder anderen physikalischen Einwirkungen. Aus diesem Grund hat es sich bewährt, die Schnittstelleneinrichtung eines portablen Datenträgers mit einem Verschlusselement zu versehen, mit dem die Schnittstelleneinrichtung eines unbenutzten Datenträgers abgedeckt werden kann.

Insbesondere bei intensiver Benutzung eines derartigen portablen Datenträgers entsteht jedoch das Problem, dass das in der Regel relativ kleine Verschlusselement verloren gehen kann und dann nicht mehr zum Schutz der Schnittstelleneinrichtung zur Verfügung steht.

US 2005/0130469 A1 offenbart einen Hauptkörper, mit einem USB-Anschluß und einer Kappe, die zum Abdecken des USB-Anschlusses dient. Der Hauptkörper und die Kappe werden so zusammengebaut, dass sie in einer auseinander gezogenen oder zusammen geschobenen Weise zueinander bewegt werden können, dass der USB-Anschluß von der Kappe abgedeckt wird, oder sie können im Verhältnis zu einander in einem auseinander gezogenen Zustand gedreht werden, so daß die Kappe vom Hauptkörper entfernt wird.

US 2005/0079738 A1 offenbart eine USB-Speichervornchtung, mit einem USB-Stecker mit Anschlüssen auf der Ober- und Unterseite, so daß ein Informations-Endgerät wie ein PC, ein Notebook, ein Spieler MP3 und eine digitale Kamera, mit der USB-Speichervorrichtung verbunden werden kann. Die USB-Speichervorrichtung umfasst eine Haupteinheit und eine Abdeckung. Die Haupteinheit ist mit dem USB-Stecker verbunden. Ferner umfasst die USB-Speichervorrichtung Gleitschienen in Längsrichtung, um eine Führungsschiene für Vorsprünge der Abdeckung zu schaffen, wobei die Vorsprünge der Abdeckung in den Gleitschienen beweglich und drehbar gelagert sind.

Demzufolge ist es die Aufgabe der vorliegenden Erfindung, einen verbesserten Schutz für Schnittstelleneinrichtungen von portablen Datenträgern bereitzustellen.

Ein erfindungsgemäßer portabler Datenträger umfasst einen Datenträgerkörper mit einem darin integrierten Datenspeicher und einer Schnittstelleneinrichtung für Schreib-/Lesezugriffe von außerhalb des Datenträgers auf den Datenspeicher. Weiterhin umfasst der portable Datenträger ein auf die Schnittstelleneinrichtung des Datenträgerkörpers aufsetzbares und von ihr abziehbares Verschlusselement, das über eine Verbindungseinrichtung dauerhaft mit dem Datenträgerkörper verbunden ist. Hierbei ist die von der Verbindungseinrichtung bereitgestellte dauerhafte Verbindung zwischen Datenträgerkörper und Verschlusselement derart ausgestaltet, dass das Verschlusselement relativ zu dem Datenträgerkörper derart verschiebbar ist, dass das Verschlusselement von der Schnittstelleneinrichtung abgezogen werden kann und in abgezogenem Zustand von der Schnittstelleneinrichtung fortgeschwenkt werden kann, um diese freizugeben.

Durch die dauerhafte Verbindung des Datenträgerkörpers und des Verschlusselements mittels der Verbindungseinrichtung kann das Verschlusselement nicht mehr verloren gehen, wenn der portable Datenträger benutzt wird. Da die Verbindungseinrichtung so ausgestaltet ist, dass das Verschlusselement die Benutzung der Schnittstelleneinrichtung nicht behindert, sondern durch Fortschwenken freigibt, ist ein komfortables Arbeiten mit dem Datenträger möglich, ohne dass das Verschlusselement von dem Datenträgerkörper entfernt werden müsste.

Vorzugsweise ist die Verbindungseinrichtung dabei derart ausgestaltet, dass das Verschlusselement um zumindest 180 Grad um den Datenträgerkörper herum schwenkbar ist, nachdem es von der Schnittstelleneinrichtung abgezogen wurde. Das bedeutet, das Verschlusselement kann durch einen 180-Grad-Schwenk maximal weit von der Schnittstelleneinrichtung entfernt werden, indem es auf die der Schnittstelleneinrichtung gegenüberliegende Seite des Datenträgerkörpers geschwenkt wird.

Bei einem in Benutzung befindlichen portablen Datenträger, bei dem die Schnittstelleneinrichtung mit einem Schreib-/Lesegerät verbunden ist, kann das Verschlusselement durch Schwenken um 180 Grad um den Datenträgerkörper herum an der der Schnittstelleneinrichtung gegenüberliegenden Seite des Datenträgerkörpers in eine Halteposition gebracht werden und in ihr arretiert werden, so dass eine etwaige Schwenkbewegung des Verschlusselements während der Benutzung des Datenträgers verhindert werden kann.

Vorzugsweise ist die Verbindungseinrichtung als eine Stift/LanglochAnordnung ausgestaltet, wobei entweder zumindest ein Stift an dem Datenträgerkörper angebracht ist und ein entsprechendes Langloch an dem Verschlusselement eingerichtet ist oder, umgekehrt, ein Langloch an dem Datenträgerkörper eingerichtet ist, während sich ein entsprechender Stift an dem Verschlusselement befindet. Im letztgenannten Fall ist das Langloch des Datenträgerkörpers, in das ein Stift des Verschlusselements eingreift, vorzugsweise ein Sackloch.

Eine derartige Stift/Langloch-Anordnung ermöglicht die erforderliche Bewegungsfreiheit des Verschlusselements gegenüber dem Datenträgerkörper, indem das Verschlusselement unter Gleiten des Stifts in dem Langloch von der Schnittstelleneinrichtung abgezogen werden kann und unter Rotieren des Stifts in dem Langloch von der Schnittstelleneinrichtung fortgeschwenkt werden kann.

Vorzugsweise ist an jeweils zwei gegenüberliegenden Seitenflächen des Datenträgerkörpers jeweils ein Stift angebracht, die sich in einander entgegengesetzte Richtungen von den Seitenflächen des Datenträgerkörpers fort erstrecken. Entsprechend sind auf zwei gegenüberliegenden Seitenflächen des Verschlusselements entsprechende Langlöcher vorgesehen, in die jeweils ein Stift des Datenträgerkörpers eingreifen kann.

Vorzugsweise bildet der Datenträgerkörper einen sich in eine Hauptersteckungsrichtung erstreckenden, länglich ausgestalteten, stab- oder stiftförmigen Korpus, wobei die Schnittstelleneinrichtung an einem Kopfabschnitt des länglichen Datenträgerkörpers ausgebildet ist. Bei Benutzung des Datenträgers wird ein derartiger stab- oder stiftförmiger Datenträgerkörper mit der an seinem Kopfabschnitt befindlichen Schnittstelleneinrichtung mit einer Schreib-/Leseeinrichtung in Verbindung gebracht. Falls das Verschlusselement entweder auf der Schnittstelleneinrichtung aufgesetzt ist oder um 180 Grad zu einem dem Kopfabschnitt gegenüberliegenden Endabschnitt des Datenträgerkörpers geschwenkt wurde, erstrecken sich die in dem Verschlusselement angebrachten Langlöcher in die Haupterstreckungsrichtung des Datenträgerkörpers.

An dem dem Kopfabschnitt des Datenträgerkörpers gegenüber liegenden Endabschnitt kann eine Aufsatzelement angebracht sein, auf das das Verschlusselement in ähnlicher Weise aufgesetzt werden kann, wie auf die Schnittstelleneinrichtung am Kopfabschnitt. Es ist allerdings auch möglich, auf ein derartiges Aufsatzelement zu verzichten, und andere Arretiermechanismen bereitzustellen, die das Verschlusselement an dem Endabschnitt des Datenträgerkörpers halten, wenn dieser in Benutzung ist. Hierzu zählen insbesondere auch eine oder mehrere Rastnasen, die in zumindest eines der Langlöcher einrasten, wenn das Verschlusselement an dem Endabschnitt des Datenträgerkörpers sitzt.

Vorzugsweise ist das Verschlusselement aus einem im wesentlichen U-förmigen, einteiligen Klammerelement aufgebaut, in dessen Scheitel eine Schutzkappe befestigt ist, die über die Schnittstelleneinrichtung passt und bei einer entsprechenden Bewegung des Verschlusselements relativ zu dem Datenträgerkörper auf die Schnittstelleneinrichtung aufgesetzt werden kann. Das Klammerelement wiederum umfasst zwei einander gegenüberliegende Seitenschenkel, die den Datenträgerkörper an seinen zwei gegenüberliegenden Seitenflächen klammerartig erfassen. Das U-förmige Klammerelement ist vorzugsweise aus einem gebogenen Blech gefertigt, so dass ein besonderer Schutzeffekt für den üblicherweise aus einem Kunststoffmaterial gefertigten Datenträgerkörper erreicht wird. An den Seitenschenkeln des Klammerelements ist jeweils ein Teil der Verbindungseinrichtung angebracht, vorzugsweise ein Langloch einer Stift/Langloch-Anordnung, das das Verschlusselement über die Seitenschenkel des Klammerelements dauerhaft mit dem Datenträgerkörper verbindet.

Vorzugsweise ist das U-förmige Klammerelement derart ausgestaltet, dass die Seitenschenkel die entsprechend umklammerten Seitenflächen des Datenträgerkörpers vollständig bedecken, wenn die Schutzkappe auf der Schnittstelleneinrichtung sitzt. Besonders bevorzugt ist die Form der Seitenschenkel im wesentlichen gleich der Form der Seitenflächen des Datenträgerkörpers, wobei die Seitenschenkel vorzugsweise bündig an die Seitenflächen des Datenträgerkörpers anschließen, so dass Kanten und Aussparungen vermieden werden können, in denen sich während der Nichtbenutzung des Datenträgers Schmutz ansammeln könnte.

An der Kopfseite des Verschlusselements, die in die Richtung des Abziehens des Verschlusselements von der Schnittstelleneinrichtung weist, ist vorzugsweise eine Halteeinrichtung zum Halten des Datenträgers angebracht. Die Halteeinrichtung besteht vorzugsweise aus einer Öse, durch die ein Halteband gezogen werden kann.

Durch die besondere Anordnung der Halteeinrichtung an der genannten Stelle des Verschlusselements wird sichergestellt, dass eine bequeme Handhabung des Datenträgerkörpers möglich ist, wenn das Verschlusselement zu dem Endabschnitt des Datenträgerkörpers geschwenkt wurde, da die Schnittstelleneinrichtung frei zugänglich und mit einer Kommunikationsvorrichtung leicht kontaktierbar ist. Vorzugsweise wird die Öse dadurch gebildet, dass die Schutzkappe im Scheitel des Klammerelements nicht aufsetzt, sondern ein kleiner Abstand zwischen der Innenfläche des Klammerelements und der Schutzkappe verbleibt, der die Öse bildet. Zusätzlich kann zur weiteren Sicherung eines portablen Datenträgers an der Kopfseite des Verschlusselements ein Halteclip angebracht sein, der es ermöglicht, den Datenträger an eine entsprechende Unterlage, z.B. einem Gürtel, festzuklemmen. Vorzugsweise ist der Halteclip entfernbar an dem Verschlusselement angebracht, z.B. indem Stifte des Halteclips in die Ösen am Kopfende des Verschlusselements eingeführt werden.

Die vorliegende Erfindung betrifft grundsätzlich beliebige portable Datenträger, die eine separat zu schützende Schnittstelleneinrichtung besitzen. Insbesondere betrifft die vorliegende Erfindung jedoch ein USB-Speicherelement (einen USB-Stick) mit einem USB-Stecker als Schnittstelleneinrichtung.

Weitere Merkmale der Erfindung ergeben sich aus der folgenden Beschreibung verschiedener erfindungsgemäßer Ausführungsbeispiele und Ausführungsaltemativen. Es wird auf die folgenden Figuren verwiesen, welche zeigen:
- Figur 1: einen erfindungsgemäßen Datenträger in verschlossenem Zustand;
- Figur 2: einen Datenträger, bei dem das Verschlusselement von der Schnittstelleneinrichtung abgezogen ist;
- Figur 3: einen Datenträger, bei dem das von der Schnittstelleneinrichtung abgezogene Verschlusselement von der Schnittstelleneinrichtung fortgeschwenkt wurde;
- Figur 4: einen Datenträger, bei dem das Verschlusselement um 180 Grad um den Datenträgerkörper herum in eine Halteposition ge- schwenkt wurde;
- Figur 5: ein Datenträger mit einer Halteeinrichtung; und
- Figur 6: einen Datenträger mit einem Halteclip.

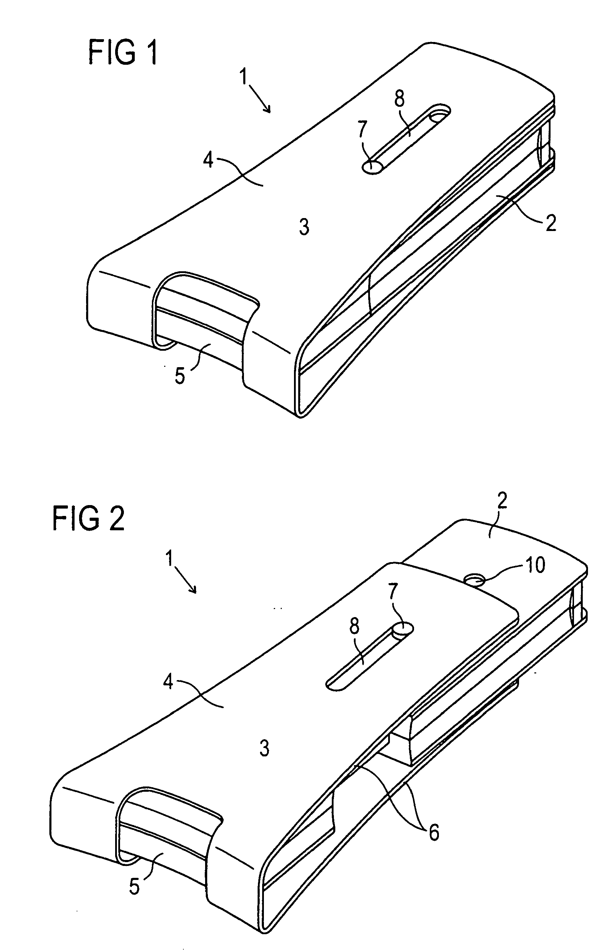

Die Figuren 1 bis 4 zeigen einen USB-Stick 1, bestehend aus einem Datenträgerkörper 2, der einen Speicher und einen USB-Stecker 9 umfasst, und einem dauerhaft mit dem Datenträgerkörper 2 verbundenen Verschlusselement 3, das ein U-förmiges Klammerelement 4 umfasst, in dessen innenliegendem Scheitel eine Schutzkappe 5 eingesetzt ist, die auf den USB-Stecker 9 passt. Die Schutzkappe 5 und der USB-Stecker 9 stehen in einer Wechselwirkung derart, dass die Schutzkappe 5 in den USB-Stecker 9 einrastet oder einschnappen kann, falls die Schutzkappe 5 auf den USB-Stecker 9 aufgesetzt wird, so dass sie nur unter Kraftaufwand wieder von dem USB-Stecker 9 abgezogen werden kann.

Figur 1 zeigt den erfindungsgemäßen USB-Stick 1 in einem verschlossenen Zustand. Hierbei umschließt die Schutzkappe 5 den USB-Stecker 9 vollständig und bietet einen ausreichenden Schutz des USB-Steckers 9 gegenüber Verschmutzung, Verstauben und sonstigen schädlichen äußeren Einflüssen. Die Schutzkappe 5 ist vorzugsweise im Hinblick auf den Datenträgerkörper 2, auf dem sie aufsitzt, bündig ausgestaltet, so dass die Schutzkappe 5 und der Datenträgerkörper 2 zusammen einen im Wesentlichen kerben- und nutenfreien länglichen Korpus bilden. Im geschlossenen Zustand umschließt das U-förmige Klammerelement 4, in dessen Scheitel die Schutzkappe 5 angebracht ist, mit seinen beiden Seitenschenkeln 6 den Datenträgerkörper 2 vollständig, so dass die Seitenschenkel 6 einen zusätzlichen Schutz der Seitenflächen des Datenträgerkörpers 2 bieten, die sie bedecken.

Eine Verbindungseinrichtung zwischen dem Datenträgerkörper 2 und dem Verschlusselement 3 wird durch eine Stift/Langloch-Anordnung 7, 8 gebildet, wobei in den beiden Seitenschenkeln 6 des Klammerelements 4 jeweils ein Langloch 8 in Richtung einer Haupterstreckungsrichtung des Verschlusselements 2 eingebracht ist, so dass sich die Langlöcher 8 in dem in Fig. 1 gezeigten verschlossenen Zustand des USB-Sticks 1 auch entlang der Haupterstreckungsrichtung des länglichen Datenträgerkörpers 2 erstrecken. In die beiden Langlöcher 8 in den Seitenschenkeln 6 des Klammerelements 4 greift jeweils ein Stift 7 ein, der aus einer Seitenfläche des Datenträgerkörpers 2 hervorspringt. Die beiden Stifte 7 bewirken eine dauerhafte Befestigung des Verschlusselements 3 an dem Datenträgerkörper 2 und werden von den beiden Langlöchern 8 geführt, um eine relative Bewegung des Verschlusselements 3 gegenüber dem Datenträgerkörper 2 zu erlauben.

Die beiden Langlöcher 8 sind vorzugsweise zumindest so lang, dass ein bequemes Abziehen des Verschlusselements 3 bzw. der Schutzkappe 5 des Verschlusselements 3 von dem USB-Stecker 9 möglich ist. Fig. 2 zeigt einen dementsprechenden Zustand des USB-Sticks 1, in dem das Verschlusselement 3 in der Haupterstreckungsrichtung von dem Datenträgerkörper 2 abgezogen ist und der USB-Stecker 9 in der seitlich entstehenden Lücke zwischen der Schutzkappe 5 und dem Datenträgerkörper 2 sichtbar wird. Dabei wird der Stift 7 im Vergleich zu Fig. 1 entlang des gesamten Langloches 8 geführt, bis er an der jeweils anderen Seite des Langlochs 8 anschlägt und dadurch die relative Bewegung des Verschlusselements 2 begrenzt.

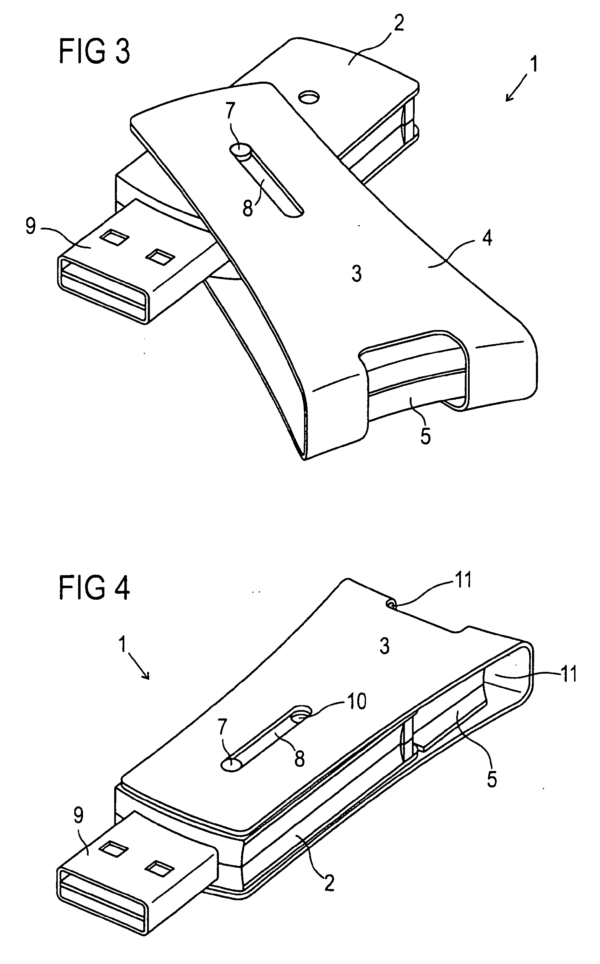

Nachdem das Verschlusselement 3 soweit wie erforderlich von dem USB-Stecker 9 entsprechend der Führung des Stifts 7 durch das Langloch 8 abgezogen wurde, kann das Verschlusselement 3 um eine durch die Stifte 7 definierte Hochachse des Datenträgerkörpers 2 geschwenkt werden. Wie Figur 3 zeigt, wird die Schutzkappe 5 von dem USB-Stecker 9 derart fortgeschwenkt, dass sie bei einer Benutzung des USB-Sticks 1 den Zugang zu dem USB-Stecker 9 nicht behindert. Vorzugsweise kann das Verschlusselement 3 auf diese Weise um zumindest 180 Grad, vorzugsweise um 360 Grad, um den Datenträgerkörper 2 herum geschwenkt werden.

Fig. 4 zeigt, dass die Schutzkappe 5 bei einem Schwenken des Verschlusselements 3 um 180 Grad an dem Endabschnitt des Datenträgerkörpers 2 positioniert ist und mit dem Datenträgerkörper 2 zusammen einen länglichen Korpus bildet, an dessen Kopfseite sich der frei zugängliche USB-Stecker 9 befindet. In dieser Position wird das Verschlusselement 3 durch eine Rastnase 10 arretiert, derart in das Langloch 8 eingeschnappt, dass das Verschlusselement 3 nicht mehr ohne weiteres relativ zu dem Datenträgerkörper 2 bewegt werden kann. Alternativ zu einer Rastnase 10 kann auch ein Aufsatzelement (nicht dargestellt) an der Endseite des Datenträgerkörpers 2 angebracht sein, auf das die Verschlusskappe 5 in gleicher Weise aufgesetzt werden kann, wie auf den USB-Stecker 9.

Die Seitenschenkel 6 des Verschlusselements 3 sind vorzugsweise derart geformt, dass sie die entsprechenden Seitenflächen des Datenträgerkörpers 2 vollständig abdecken. Auf diese Weise ist die Gestalt des USB-Sticks 1 in geschlossener Position (Fig. 1) abgesehen von dem USB-Stecker 9 weitestgehend gleich der Gestalt in geöffneter Position (Fig. 4).

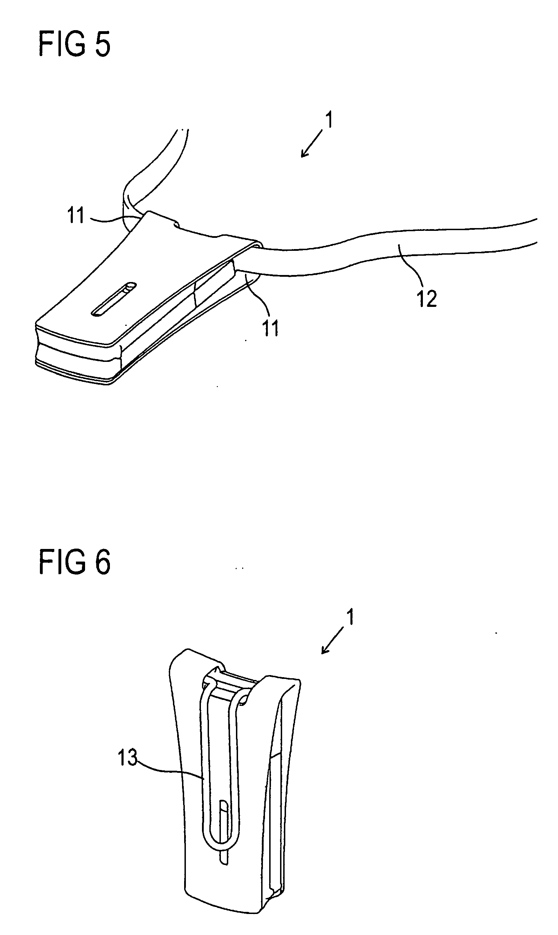

Fig. 5 zeigt, dass an der Kopfseite des Verschlusselements 3 zwei Ösen 11 gebildet sind, durch die ein Halteband 12 hindurch gezogen werden kann. Die Ösen 11 werden dadurch gebildet, dass die Schutzkappe 5 nicht vollständig bündig in den Scheitel des einstückigen Klammerelements 4 eingesetzt ist, sondern ein Freiraum zwischen dem Scheitelbereich des Klammerelements 4 und der Schutzkappe 5 verbleibt, durch den das Halteband 12 hindurch gezogen werden kann. Darüber hinaus kann an dem Verschlusselement 3 ein Halteclip 13 angebracht werden, der zur Befestigung des USB-Sticks 1 an einem schmalen Gegenstand dient (Fig. 6). Der Halteclip 13 wird befestigt, indem dessen beide offenen Enden in die Ösen 11 eingeschoben werden.

## Patentansprüche

1. Portabler Datenträger (1), umfassend einen Datenträgerkörper (2) mit einer Schnittstelleneinrichtung (9) und ein auf die Schnittstelleneinrichtung (9) aufsetzbares und von ihr abziehbares Verschlusselement (3), eine Verbindungseinrichtung (7, 8), die das Verschlusselement (3) mit dem Datenträgerkörper (2) dauerhaft derart verbindet, dass das Verschlusselement (3) derart relativ zu dem Datenträgerkörper (2) verschiebbar ist, dass das Verschlusselement (3) von der Schnittstelleneinrichtung (9) abziehbar ist und in abgezogenem Zustand derart schwenkbar ist, dass die Schnittstelleneinrichtung (9) freigegeben wird, wobei
die Verbindungseinrichtung (7, 8) derart ausgestaltet ist, dass das Verschlusselement (3) in abgezogenem Zustand um zumindest 180 Grad um den Datenträgerkörper (2) schwenkbar ist, wobei
die Verbindungseinrichtung (7, 8) zumindest eine Stift/Langloch-Anordnung umfasst, bei der ein Stift (7) in ein entsprechendes Langloch (8) eingreift, das den Stift (7) beim Abziehen und Schwenken des Verschlusseleinents (3) in dem Langloch (8) führt, wobei
auf zwei gegenüberliegenden Seitenflächen des Datenträgerkörpers (2) jeweils ein Stift (7) angebracht ist, wobei die Stifte (7) in einander entgegengesetzte Richtungen von dem Datenträgerkörper (2) fort weisen, und jeder Stift (7) in jeweils eines von zwei auf gegenüberliegenden Seitenflächen des Verschlusselements (3) angebrachten, entsprechenden Langlöchern (8) eingreift, wobei
sich der Datenträgerkörper (2) in eine Haupterstreckungsrichtung länglich erstreckt und die Schnittstelleneinrichtung (9) an einem Kopfabschnitt des Datenträgerkörpers (2) derart ausgebildet ist, dass sich die Langlöcher (8) in einem aufgesetzten Zustand des Verschlusselements (3) derart in die Erstreckungsrichtung erstrecken, dass das Verschlusselement (3) in Erstreckungsrichtung von der Schnittstelleneinrichtung (9) abziehbar ist, **dadurch gekennzeichnet, dass**
zumindest eine Rastnase (10), die derart an dem Datenträgerkörper (2) angebracht ist, dass sie in ein Langloch (8) des Verschlusselements (3) einrastet, wenn das Verschlusselement (3) zu einem dem Kopfabschnitt gegenüberliegenden Endabschnitt des länglichen Datenträgerkörpers (2) geschwenkt wird.

2. Datenträger (1) nach Anspruch 1, **dadurch gekennzeichnet, dass** das Verschlusselement (3) ein im Wesentlichen U-förmiges, einteiliges Klammerelement (4) und eine in dem Scheitel des Klammerelements befestigte, auf die Schnittstelleneinrichtung (9) aufsetzbare und von ihr abziehbare Schutzkappe (5) umfasst, wobei zwei einander gegenüberliegende Seitenschenkel (6) des Klammerelements (4) zwei entsprechende Seitenflächen des Datenträgerkörpers (2) klammerartig erfassen.

3. Datenträger (1) nach Anspruch 2, **dadurch gekennzeichnet, dass** das Klammerelement (4) derart ausgestaltet ist, dass die Seitenschenkel (6) die entsprechenden Seitenflächen des Datenträgerkörpers (2) vollständig überdecken, wenn die Schutzkappe (5) auf der Schnittstelleneinrichtung (9) sitzt.

4. Datenträger (1) nach Anspruch 2 oder 3, **gekennzeichnet durch** eine zwischen dem Klammerelement (4) und der Schutzkappe (5) in dem Scheitel des Klammerelements (4) gebildete Öse (11), **durch** die ein Halteband (12) durchgezogen werden kann.

5. Datenträger (1) nach einem der Ansprüche 1 bis 4, **gekennzeichnet durch** einen an einer in Richtung des Abziehens des Verschlusselements (3) von der Schnittstelleneinrichtung (9) gewandten Kopfseite des Verschlusselements (3) angebrachten Halteclip (13).

6. Datenträger (1) nach einem der Ansprüche 1 bis 5, **dadurch gekennzeichnet, dass** der Datenträger ein USB-Stick mit einem USB-Stecker als Schnittstelleneinrichtung (9) ist.

## Claims

1. A portable data carrier (1), comprising a data carrier body (2) with an interface device (9) and a closure element (3) to be placed on the interface device (9) and removed therefrom, a connection device (7, 8) which connects the closure element (3) lastingly to the data carrier body (2) such that the closure element (3) is displaceable relative to the data carrier body (2) such that the closure element (3) is removable from the interface device (9) and, in the removed state, is swivelable such that the interface device (9) is uncovered, whereby
the connection device (7, 8) is configured such that the closure element (3), in the removed state, is swivelable at least 180 degrees around the data carrier body (2), whereby
the connection device (7, 8) comprises at least one pin/oblong hole arrangement wherein a pin (7) engages a corresponding oblong hole (8) which guides the pin (7) upon removal and swiveling of the closure element (3) in the oblong hole (8), whereby
on two opposing side faces of the data carrier body (2) there is provided a pin (7) in each case, whereby the pins (7) point away from the data carrier body (2) in mutually opposing directions, and each pin (7) respectively engages one of two corresponding oblong holes (8) provided on opposing side faces of the closure element (3), whereby
the data carrier body (2) extends elongately in a main direction of extension, and the interface device (9) is configured on a head portion of the data carrier body (2) such that the oblong holes (8), in a placed-on state of the closure element (3), extend in the direction of extension such that the closure element (3) is removable from the interface device (9) in the direction of extension, **characterized in that**
at least one locking nose (10) which is provided on the data carrier body (2) so as to engage an oblong hole (8) of the closure element (3) when the closure element (3) is swiveled to an end portion of the elongate data carrier body (2) opposing the head portion.

2. The data carrier (1) according to claim 1, **characterized in that** the closure element (3) comprises a substantially U-shaped, one-part clip element (4) and a protective cap (5) fastened in the crown of the clip element and to be placed on the interface device (9) and removed therefrom, whereby two mutually opposing side legs (6) of the clip element (4) grasp in clip-like fashion two corresponding side faces of the data carrier body (2).

3. The data carrier (1) according to claim 2, **characterized in that** the clip element (4) is configured such that the side legs (6) completely cover the corresponding side faces of the data carrier body (2) when the protective cap (5) is seated on the interface device (9).

4. The data carrier (1) according to claim 2 or 3, **characterized by** an eyelet (11) formed between the clip element (4) and the protective cap (5) in the crown of the clip element (4), through which eyelet a holding strap (12) can be drawn.

5. The data carrier (1) according to any of claims 1 to 4, **characterized by** a holding clip (13) provided on a head side of the closure element (3) facing in the direction of removal of the closure element (3) from the interface device (9).

6. The data carrier (1) according to any of claims 1 to 5, **characterized in that** the data carrier is a USB stick with a USB plug as the interface device (9).

## Revendications

1. Support de données portable (1), comprenant un corps (2) de support de données avec un dispositif d'interface (9), un élément de fermeture (3) pouvant être mis en place sur le dispositif d'interface (9) et pouvant en être retiré, un dispositif de liaison (7, 8) qui relie durablement l'élément de fermeture (3) au corps (2) de support de données, de telle sorte que l'élément de fermeture (3) est déplaçable par rapport au corps (2) du support de données de manière que l'élément de fermeture (3) peut être retiré du dispositif d'interface (9) et être pivoté en état de retrait pour que le dispositif d'interface (9) soit dégagé,
le dispositif de liaison (7, 8) étant réalisé de telle sorte que l'élément de fermeture (3) peut être pivoté en état de retrait d'au moins 180 degrés autour du corps (2) du support de données,
le dispositif de liaison (7, 8) comprenant au moins un dispositif à goupille/trou oblong, où une goupille (7) s'engage dans un trou oblong (8) qui guide la goupille (7) dans le trou oblong (8) lors du retrait et du pivotement de l'élément de fermeture (3),
une goupille (7) étant disposée sur chacune de deux surfaces latérales opposées du corps (2) du support, lesdites goupilles (7) s'étendant dans des directions opposées du corps (2) du support de données, et chaque goupille (7) s'engageant dans un des deux trous oblongs (8) correspondants ménagés sur des surfaces latérales opposées de l'élément de fermeture (3),
le corps (2) du support de données s'étendant en longueur dans une direction principale d'extension et le dispositif d'interface (9) étant réalisé sur une partie de tête du corps (2) du support de données de telle sorte que les trous oblongs (8) s'étendent dans la direction d'extension dans un état de mise en place de l'élément de fermeture (3) de manière que l'élément de fermeture (3) soit retirable du dispositif d'interface (9) dans la direction d'extension, **caractérisé**
**en ce qu'**au moins un téton d'enclenchement (10) est appliqué contre le corps (2) du support de données de manière à s'enclencher dans un trou oblong (8) de l'élément de fermeture (3) lorsque l'élément de fermeture (3) est pivoté vers une partie d'extrémité opposée à la partie de tête du corps (2) oblong du support de données.

2. Support de données (1) selon la revendication 1, **caractérisé en ce que** l'élément de fermeture (3) comprend un élément en agrafe (4) d'un seul tenant sensiblement en forme de U, et un capuchon protecteur (5) fixé à l'intérieur du sommet de l'élément en agrafe, pouvant être mis en place sur le dispositif d'interface (9) et retiré de celui-ci, deux branches latérales (6) opposées de l'élément en agrafe (4) enserrant deux surfaces latérales correspondantes du corps (2) du support de données.

3. Support de données (1) selon la revendication 2, **caractérisé en ce que** l'élément en agrafe (4) est réalisé de telle manière que les branches latérales (6) recouvrent complètement les surfaces latérales correspondantes du corps (2) du support de données lorsque le capuchon protecteur (5) est mis en place sur le dispositif d'interface (9).

4. Support de données (1) selon la revendication 2 ou la revendication 3, **caractérisé par** un anneau (11) formé entre l'élément en agrafe (4) et le capuchon protecteur (5) à l'intérieur du sommet de l'élément en agrafe (4), au travers duquel peut être passée une sangle (12).

5. Support de données (1) selon l'une des revendications 1 à 4, **caractérisé par** un clip de maintien (13) disposé sur un côté de tête de l'élément de fermeture (3) dans la direction de retrait de l'élément de fermeture (3) hors du dispositif d'interface (9).

6. Support de données (1) selon l'une des revendications 1 à 5, **caractérisé en ce que** le support de données est une clé USB avec une fiche USB en tant que dispositif d'interface (9).
